# NEUE EUROPÄISCHE PATENTSCHRIFT

(11) **EP 0 878 356 B2**
(45) Veröffentlichungstag und Bekanntmachung des Hinweises auf die Entscheidung über den Einspruch: **30.06.2004**
(45) Hinweis auf die Patenterteilung: 01.08.2001
(21) Anmeldenummer: 98108502.0
(22) Anmeldetag: 11.05.1998
(51) Int. Cl.: B60R 21/00

(54) **Verfahren zur benutzeradaptierten Steuerung von Fahrgast-Schutzeinrichtungen**
Process for monitoring vehicle passenger safety devices according to said passengers
Méthode pour contrôler les dispositifs de protection des occupants d'un véhicule en fonction desdits occupants

(30) Priorität: 15.05.1997 DE 19720360
(43) Veröffentlichungstag der Anmeldung: 18.11.1998
(73) Patentinhaber: Bayerische Motoren Werke Aktiengesellschaft, 80788 München (DE)
(72) Erfinder: Bachmaier, Peter, 85777 Fahrenzhausen (DE)

(56) Entgegenhaltungen:
- DE-A- 4 112 579
- FR-A- 2 740 411
- US-A- 5 330 226
- US-A- 5 602 734
- US-A- 5 626 359

## Beschreibung

Die Erfindung bezieht sich auf ein Verfahren mit den Merkmalen des Oberbegriffs von Patentanspruch 1.

Unter "biomechanische Parameter" sind im folgenden die für die benutzerindividuelle Steuerung von Sicherheitseinrichtungen relevanten biomechanischen Größen wie Größe, Gewicht, Geschlecht, Alter sowie dmitzusammenhängende Einflußgrößen wie körperliche Fitneß bzw. körperlicher Zustand und die damit verbundene physische Belastbarkeit des Fahrgastes zu verstehen.

Ein Verfahren der eingangs genannten Art ist beispielsweise aus der DE 4112579 A1 bekannt. Dort wird eine Fahrgastschutzeinrichtung in Form von Aufschlagelementen, die vor Verletzungen an Innenraumteilen des Fahrzeugs schützen, entsprechend verschiedener Parameter des Fahrgastes gesteuert. Dabei handelt es sich neben dem Gewicht, der Größe, die Sitzeinstellung, die Sitzhaltung insbesondere auch um das Alter Parameter des Fahrgastes. Dasselbe Ziel verfolgt auch ein Gurtstraffersystem, das aus der DE 195 20 721 A bekannt ist.

Ziel der bekannten und auch des erfindungsgemäßen Verfahrens ist es, die Fahrgastschutzeinrichtungen so zu steuern, daß sie ein möglichst geringes Verletzungsrisiko für den Fahrgast bieten. Als Fahrgastschutzeinrichtungen sind beispielsweise Front- und Seitenairbags, Sicherheitsgurte, Gurtstraffer usw. bekannt und im Rahmen der Erfindung vorgesehen.

Bei den bekannten Verfahren wird die Information über die biomechanischen Parameter des Benutzers durch diesen selbst z. B. mit Hilfe einer Tastatur eingegeben. Dies bietet erhebliche Fehlermöglichkeiten und ist umständlich. Auch kann dadurch nicht gewährleistet werden, daß die Steuerung in jedem Fall tatsächlich an die biomechanischen Parameter des Benutzers angepaßt ist.

Die US 5 626 359 beschreibt schließlich ein Verfahren zur Steuerung einer Fahrgastschutzeinrichtung, wie insbesondere ein Airbag. Um die Wirksamkeit des Airbagsystems zu erhöhen, wird vorgeschlagen, mindestens zwei fahrgastspezifische Parameter, wie insbesondere das Gewicht des Fahrgasts und den aktuellen Abstand des Fahrgasts vom Airbag, über entsprechende Sensoren zu bestimmen. Auf der Basis der Werte dieser mindestens zwei Parameter wird die dem Airbag im Crash-Fall zugeführte Gasmenge vorgegeben. Die dem Airbag zugeführte Gasmenge hat einen wesentlichen Einfluss auf die Härte des Airbags, auf den der Fahrgast aufprallt.

Die Aufgabe der Erfindung besteht demgegenüber in einer Verbesserung der Anpassung der bekannten Steuerung an den konkreten Benutzer einer Fahrgastschutzeinrichtung.

Die Erfindung löst diese Aufgabe durch die Merkmale des Patentanspruchs 1. Vorteilhafte Ausgestaltungen der Erfindung sind Gegenstand der Unteransprüche.

Unter Verhaltenscharakteristiken des Fahrgastes sind sämtliche Bewegungen und Handlungen des Fahrgastes zu verstehen, die er im Rahmen der Fahrzeugbenutzung, d,h, vor, während und nach der Inbetriebnahme des Fahrzeugs und/oder einer Fahrt vornimmt. Handlungen vor der Fahrt sind beispielsweise das Entriegeln, Öffnen der Fahrzeugtür, Einstellen von Fahrzeugkomponenten wie Innen- und Außenspiegel, des Sitzes usw.

Aus dem jeweiligen Einstellwert, z.B. des Innenrückblickspiegels und der Geschwindigkeit, in der diese Handlungen vorgenommen werden bzw. die Zeitdauer zwischen zwei aneinanderschließenden Handlungen, beispielsweise die Zeitdauer nach dem Öffnen des Fahrzeugs bis zur Inbetriebnahme bzw. der Einstellung der verschiedenen Ausstattungskomponenten lassen sich zumindest näherungsweise die oder ein Teil der biomechanischen Parameter gewinnen. So kann bereits zu Beginn einer Fahrt eine erste Abschätzung über die Größe und die Fitneß des Fahrers bzw. des Fahrgastes vorgenommen werden. Auch läßt sich die Intensität und die Geschwindigkeit des Einsitzens als guter Indikator für die Fitneß des Fahrgastes verwenden.

Die Information über die Verhaltenscharakteristiken können aber auch während des Fahrbetriebs gewonnen werden. Hierzu eignet sich beispielsweise das Lenkverhalten, d. h. die Geschwindigkeit von Lenkwinkeländerungen bzw. die Maximalwerte der Lenkwinkeländerungen ebenso wie die durch den Fahrer vorgenommenen Beschleunigungsabläufe des Fahrzeugs. Ein "junger" Fahrer unterscheidet sich in seinem Fahrverhalten deutlich von einem erfahrenen, älteren Fahrer. Diese Informationen über das Fahrverhalten des Fahrgastes lassen sichere Rückschlüsse über die biomechanischen Parameter und insbesondere den körperlichen Zustand des Fahrers zu.

In diesem Zusammenhang können auch Informationen sinnvoll und wertvoll sein, die bei früheren Betriebsfällen aufgenommen wurden und dazu dienten, die biomechanischen Parameter des Fahrgastes festzuhalten. Es kann sich dabei beispielsweise um Angaben handeln, die der Fahrgast bei einer früheren Inbetriebnahme des Fahrzeugs manuell oder mit Hilfe eines elektronischen Speichers (Chipcard) in einen entsprechenden Speicher eingegeben hat. Zusammen mit dieser Information liegen nun von früheren Fahrten Informationen über die Verhaltenscharakteristiken des Fahrers vor. Da dessen Verhalten i. d. R. bei einem späteren Fahrzeugbetrieb sich allenfalls unwesentlich von seinem Verhalten bei einem früheren Fahrbetrieb unterscheidet, kann damit zu einem späteren Zeitpunkt aus dem Fahrverhalten eine eindeutige Referenz zu den früheren Fahrverhalten und aus der zum früheren Zeitpunkt vorliegenden eindeutigen Information über die biomechanischen Parameter damit auch auf die biomechanischen Parameter des jeweiligen Fahrgastes geschlossen werden.

Es ist sogar möglich, die Information über die biomechanischen Parameter des Fahrgastes nur einmalig zu Beginn der Benutzung des Fahrzeugs einzugeben und aus dem Verhaltensmuster, das bei der ersten Fahrt aus dem Verhalten des Fahrgastes gewonnen wurde und dem sehr ähnlichen Verhaltensmuster zu einem späteren Zeitpunkt, d. h. bei späteren Fahrten, auf die biomechanischen Parameter des Fahrgastes eindeutig zu schließen.

Somit steht ein guter Indikator für die biomechanischen Parameter des Fahrgastes zu Verfügung. Die Information über die biomechanischen Parameter wird aus Verhaltensweisen gewonnen, die der Fahrgast von selbst und ohne bewußte Aktion zeigt. Hier zu nennen sind ergänzend die Dynamik beim Hinsetzen, ermittelt z.B. mit Drucksensoren im Sitz, ferner die Bewegungs- bzw. Reaktionsgeschwindigkeit während einer Fahrt, insbesondere im Zusammenhang miteiner kritischen Fahrsituation, ferner auch die generelle Fahrweise oder die Reaktion des Körpers auf Längs- und Querbeschleunigungen sowie die Geschwindigkeit und der Umfang der Bedienung von Bedienelementen.

## Patentansprüche

1. Verfahren zur benutzeradaptierten Steuerung von Fahrgastschutzeinrichtungen, mit einer Steuereinrichtung, die die Fahrgastschutzeinrichtung entsprechend den biomechanischen Parametern des Benutzers im Bedarfsfall steuert, **dadurch gekennzeichnet, dass** die Information über die biomechanischen Parameter des Fahrgastes aus dessen Verhaltenscharakteristiken beim Benutzen des Fahrzeugs im Hinblick auf die Zeitdauer zwischen zwei aneinanderschließen den Handlungen, die er im Rahmen der Fahrzungbenntzung vornimmt, abgeleitet wird.

2. Verfahren nach Anspruch 1, **dadurch gekennzeichnet, dass** die Verhaltenscharakteristiken vor der Inbetriebnahme des Fahrzeugs ermittelt werden.

3. Verfahren nach Anspruch 1 oder 2, **dadurch gekennzeichnet, dass** die Verhaltenscharakteristiken aus dem Lenkverhalten und/oder dem Betriebsverhalten des Fahrzeugs des Fahrgastes gewonnen werden.

4. Verfahren nach einem der Ansprüche 1 bis 3, **dadurch gekennzeichnet, dass** die verschiedenen Informationen über die Verhaltenscharakteristiken entsprechend ihrer Zeitdauer und/oder ihrer Prägnanz gewichtet werden.

5. Verfahren nach einem der Ansprüche 1 bis 4, **dadurch gekennzeichnet, dass** die Informationen über die Verhaltenscharakteristiken mit entsprechenden Informationen verglichen werden, die bei vorhergehenden Betriebsfällen gewonnen werden.

## Claims

1. A process for the user adapted control of occupant protection devices, with a control unit, which controls the occupant protection device in accordance with the biomechanical parameters of the user in case of need, **characterised in that** the information on the biomechanical parameters of the occupant are derived from his behavioural characteristics whilst using the vehicle with regard to the duration between two consecutive actions which he carries out in the course of using the vehicle.

2. A process according to Claim 1, **characterised in that** the behavioural characteristics are captured before the vehicle is started.

3. A process according to Claim 1 or Claim 2, **characterised in that** the behavioural characteristics are captured from steering behaviour and/or the vehicle operating behaviour of the occupant.

4. A process according to one of the Claims 1 to 3, **characterised in that** the various information on the behavioural characteristics is weighted in accordance with their duration and/or their importance.

5. A process according to one of the Claims 1 to 4, **characterised in that** the information on the behavioural characteristics is compared with corresponding information, which was gathered on previous operating occasions.

## Revendications

1. Méthode pour contrôler les dispositifs de protection des occupants d'un véhicule en fonction desdits occupants, en utilisant un dispositif de commande agissant, en cas de nécessité, sur le dispositif de protection de l'occupant en correspondance avec les paramètres biomécaniques de celui-ci,
**caractérisée en ce que**
l'information concernant les paramètres biomécaniques de l'occupant est déduite des caractéristiques du comportement de celui-ci quand il utilise le véhicule, en considérant la durée entre deux actions successives qu'il entreprend dans le cadre de l'utilisation du véhicule.

2. Méthode selon la revendication 1,
**caractérisée en ce que**
les caractéristiques de comportement sont établies avant la mise en route du véhicule.

3. Méthode selon la revendication 1 ou 2,
**caractérisée en ce que**
les caractéristiques du comportement sont tirées du comportement au volant et/ou du comportement lors du fonctionnement de véhicule, de l'occupant.

4. Méthode selon l'une quelconque des revendications 1 à 3,
**caractérisée en ce que**
les différentes informations concernant les caractéristiques de comportement sont pondérées en fonction de leur durée et/ou de leur intensité.

5. Méthode selon l'une quelconque des revendications 1 à 4,
**caractérisée en ce que**
les informations concernant les caractéristiques de comportement sont comparées à des informations correspondantes, établies dans des cas de fonctionnement antérieurs.
